# NEW EUROPEAN PATENT SPECIFICATION

(11) **EP 0 702 514 B2**
(45) Date of publication and mention of the opposition decision: **26.03.2003**
(45) Mention of the grant of the patent: 02.09.1998
(21) Application number: 95917928.4
(22) Date of filing: 13.04.1995
(51) Int. Cl.: A01G 3/04, A01G 3/00

(54) **SAFETY TRANSMISSION DEVICE, PARTICULARLY FOR HEDGE TRIMMERS**
SICHERHEITS-ÜBERTRAGUNGSEINRICHTUNG FÜR GERÄTE ZUM BESCHNEIDEN VON HECKEN
ORGANE DE TRANSMISSION DE SECURITE, DESTINE NOTAMMENT A DES TAILLE-HAIES

(30) Priority: 15.04.1994 IT VI940052
(43) Date of publication of application: 27.03.1996
(73) Proprietor: VALEX S.P.A., 36015 Schio (Vicenza) (IT)
(72) Inventor: ZANELLA, Arrigo, I-36030 Villaverla (IT)
(74) Representative: Gustorf, Gerhard, Dipl.-Ing.
(86) International application number: EP9501404
(87) International publication number: WO95028078

(56) References cited:
- DE-A- 2 340 888
- DE-A- 3 001 923
- DE-A- 3 128 282
- DE-A- 3 310 639
- DE-A- 3 343 772
- US-A- 3 625 292

## Description

The present invention relates to a safety transmission device adapted for coupling between the power unit and the cutting blades of hedge trimmers, according to the preamble of claim 1.

Portable hedge trimmers are essentially constituted by a drive unit, by a handle, and by two superimposed cutting blades which provide the cutting action by moving with respect to each other.

Among hedge trimmers, the electric type is in widespread use; its blade actuation unit is an electric motor that runs at mains voltage.

In currently commercially available hedge trimmers, the rotary motion of the drive shaft is transmitted to the cutting blades, which move in a straight-line reciprocating fashion, in a direct manner, that is to say, by means of mechanical parts that do not allow the two active units (electric motor and cutting blades) to operate independently of each other.

This construction method entails the fact that if the cutting blades jam momentarily, for example because of a thick branch of the hedge or because of the presence of metallic bodies inside the hedge, strong stresses occur on the shaft of the electric motor and may damage the motor itself and the other motion transmission parts.

Therefore hedge trimmers provided with a safety clutch located between the motor and the blades have been introduced. DE-A-2 340 888, disclosing the features of the first part of claim 1, shows such a device.

A drawback that arises in conventional electric hedge trimmers is that the electric current may reach the metallic cutting blades, jeopardizing the safety of the operator. This may happen because of a short circuit of the motor or of defects thereof, such as electric discharges between the stator and the rotor.

By adopting the device according to the invention, this drawback is eliminated, allowing the motor of the hedge trimmer to operate normally even when the blades are momentarily jammed, and allowing to electrically insulate the blades from the electric circuit that powers the motor.

This object is achieved by a safety transmission device as claimed in claim 1.

The present invention will become apparent with reference to the accompanying drawings, which illustrate an embodiment, shown only by way of non-limitative example, of the clutch unit according to the present invention, wherein:
Figure 1 is a sectional view, taken along a vertical plane, of the head of the hedge trimmer, which contains the electric motor and the clutch unit according to the invention and is equipped with the cutting blades;
Figure 2 is a vertical front view of the unit according to the invention;
Figure 3 is a plan view of the unit according to the invention;
Figure 4 is a sectional view, taken along the plane IV-IV of Figure 2, of the unit according to the invention;
Figure 5 is an exploded view of the unit according to the invention.

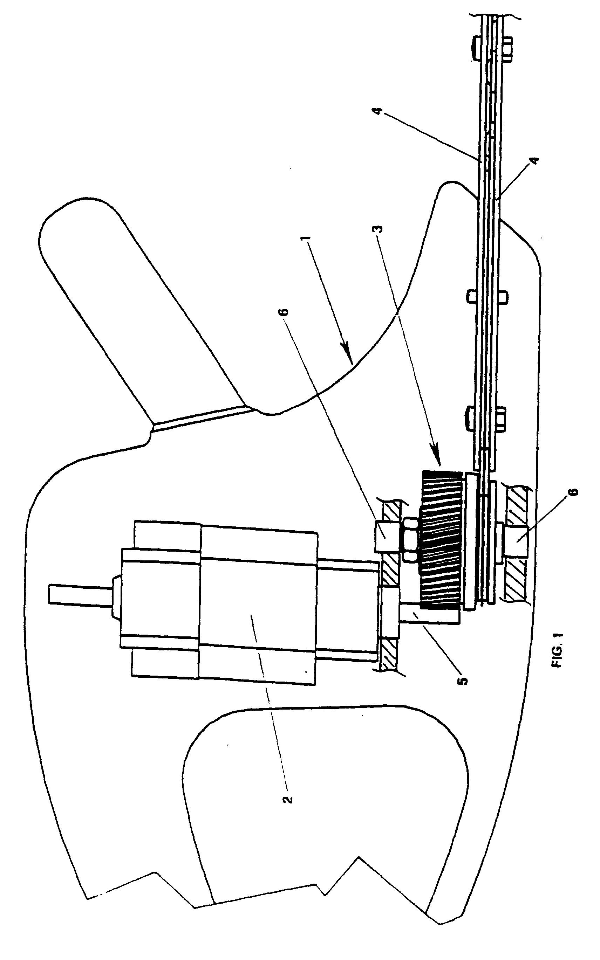

As clearly shown in Figure 1, the electric motor 2 is located inside the housing 1 of the hedge trimmer and drives, by means of the clutch unit 3, the two cutting blades 4 that protrude from the head.

The clutch unit 3 is so adapted to ensures full electric insulation of the blades and acts as flexible coupling in case of momentary jamming of the blades.

The pinion 5 is rigidly coupled to the shaft of the electric motor 2 and drives the entire clutch unit 3 on the bearings 6, which are rigidly coupled to the housing 1 of the hedge trimmer.

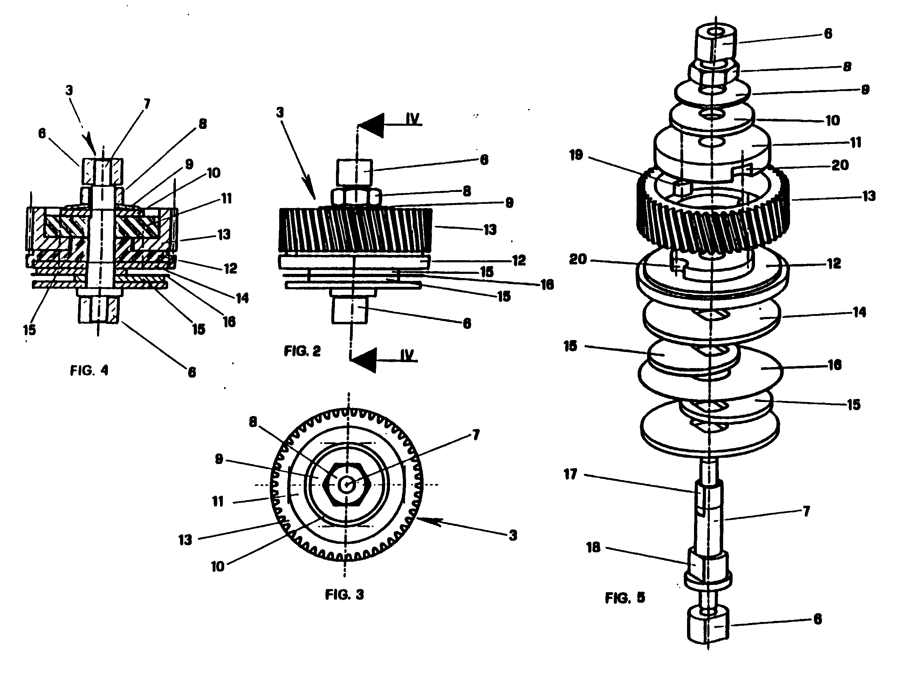

As clearly shown in Figures 4 and 5, the clutch unit 3 includes a central pivot pin 7, the ends of which are inserted in the bearings 6; multiple cylindrical bodies are keyed on the central pivot pin 7, transmit motion to the blades, and provide their electrical insulation.

All the parts, specified in detail hereinafter, that are mounted on the pivot pin 7 are kept assembled by the nut 8, which also has the purpose of adjusting the intensity of the slip force of the underlying clutch unit.

The value of the friction slip torque is preset during the assembly of the unit and is kept constant by virtue of the action of the Belleville washer 9, which is located directly below the nut 8 and is also meant to prevent the loosening of this nut.

An underlying metal disk 10 has the purpose of uniformly distributing the downward thrust force of the Belleville washer 9 and of preventing the washer from damaging the surface of the underlying first ring 11, preventing its deformation and wear during slippage. A second ring 12 having a central projection is arranged underneath and in facing relationship with the first ring 11.

A gear 13 having a central opening is inserted on the central projection on the lower ring 12 and is locked and axially supported thereagainst by the upper ring 11 in such a manner to prevent any contact with the central pivot pin 7 and to engage the pinion 5 of the electric motor 2.

Since the two rings 11 and 12 are both made of electrically insulating plastic, they provide the electrical insulation between the pinion 5 and the central pivot pin 7 and consequently between the motor 1 and the cutting blades 4, thus providing full protection of the operators against electric shocks.

The ring 12 rests on the underlying metal disk 14, which completes the clutch unit.

The two eccentric disks 15 that drive the respective cutting blades 4 and a dividing shim 16 placed between the disks are also keyed on the pivot pin 7 and rotate with it.

The upper metal disk 10 and the lower metal disk 14 are placed in contact with the pivot pin 7 by virtue of the flat faces 17 and 18 formed on the pivot; this causes the abutment of the disks on the pivot.

The lower flat faces 18 furthermore have the purpose of placing the pivot pin 7 in contact with the eccentric parts 15 of the blades 4.

The coupling between the toothed unit 13 and the two insulating rings 11 and 12 occurs by virtue of protrusions 19 that fit within the respective recesses 20.

As dearly shown by the description of the components and by the figures, the rotation of the central pivot pin 7 caused by the rotation of the gear 13 occurs by virtue of the friction force that is produced at the contact surface between the metal disk 10 and the underlying insulating ring 11 and at the contact surface between the insulating ring 12 and the underlying metal disk 14.

These surfaces for contact between the metal disk and the insulating ring are the surfaces where slippage occurs when the blades jam thus avoiding to damage the electric motor and the parts of the transmission device.

## Claims

1. Safety transmission device adapted for mounting on hedge trimmers of the type comprising:
an electric motor (2) arranged within a housing (1) and operatively coupled to a pair of superimposed cutting blades (4) which reciprocally move with respect to each other to provide the cutting action, said safety device comprising:
a clutch unit (3) located between the motor (2) and the blades (4),
said clutch unit (3) comprising:
a central pivot pin (7) rotably supported by the housing (1),
means (15) for transforming its rotary motion into a reciprocal motion of the blades (4),
a gear (13) meshing with a pinion (5) rigidly affixed to the shaft of the motor (2),
**characterized in that** said clutch unit is provided with electric insulating means adapted to electrically insulate the motor (2) from the blades (4),
and **in that** said electrical insulating means comprises a pair of rings (11, 12) made of plastic material and provided for frictionally coupling said gear (13) to said pivot pin (7), by a pair of metal rings (10, 14) arranged at the opposite planar surfaces of said plastic rings (11, 12) for frictional engagement therewith;
said plastic rings (11, 12) being packed together and mounted coaxially on said pivot pin (7) in facing relationship with each other.

2. Device according to claim 1, **characterized in that** said rings (11, 12) have protrusions (19) adapted to engage with respective recesses (20) formed on said gear to prevent relative rotation therebetween.

3. Device according to claim 1 or 2, **characterized by** means (8) for adjusting the intensity of the frictional force acting between said metal rings (10, 14) and said plastic rings (11, 12).

## Patentansprüche

1. Sicherheitsgetriebevorrichtung für die Montage in Heckenscheren des Typs, der umfasst:
- einen Elektromotor (2), der in einem Gehäuse (1) untergebracht ist und
- betriebsmäßig mit einem Paar übereinander angeordneter Schneidblätter (4) gekoppelt ist, welche sich relativ zueinander hin- und herbewegen, um die Schneidwirkung zu erzeugen,
wobei die Sicherheitsvorrichtung umfasst:
- eine Kupplungseinheit (3), die zwischen dem Motor (2) und den Schneidblättern (4) angeordnet ist, wobei diese Kupplungseinheit (3) aufweist:
- einen zentralen Drehzapfen (7), der in dem Gehäuse (1) drehbar gelagert ist,
- Mittel (15) für die Umformung der Drehbewegung in eine hinund hergehende Bewegung der Schneidblätter (4),
- ein Zahnrad (13), welches mit einem fest auf der Welle des Motors (2) angebrachten Ritzel (5) kämmt,
**dadurch gekennzeichnet, daß** die Kupplungseinheit eine elektrische Isoliereinrichtung aufweist, um den Motor (3) von den Schneidblättern (4) elektrisch zu trennen,
und daß die elektrische Isoliereinrichtung ein Paar aus Kunststoff hergestellter Ringe (11, 12) aufweist, um das Zahnrad (13) mit dem Ritzel (7) über ein Paar metallischer Ringe (10, 14) reibschlüssig zu verbinden, die an den gegenüberliegenden, ebenen Oberflächen der Kunststoffringe (11, 12) unter Reibschluß anliegen,
wobei die Kunststoffringe (11, 12) koaxial auf den zentralen Drehzapfen (7) aufgesetzt und einander gegenüberliegend aneinander gedrückt sind.

2. Vorrichtung nach Anspruch 1, **dadurch gekennzeichnet, daß** die Ringe (11, 12) Vorsprünge (19) haben, die in entsprechende Aussparungen (20) des Zahnrades (13) eingreifen und dadurch eine Relativverdrehung verhindern.

3. Vorrichtung nach Anspruch 1 oder 2, **gekennzeichnet durch** Mittel (8) zur Einstellung der Stärke der Reibkraft zwischen den metallischen Ringen (10, 14) und den aus Kunststoff bestehenden Ringen (11, 12).

## Revendications

1. Dispositif de transmission de sécurité adapté pour être monté sur des taille-haies, du type comprenant:
- un moteur électrique (2) disposé dans un carter (1) et couplé de façon opérationnelle à un couple de lames de coupe superposées (4) qui se déplacent en va-et-vient l'une par rapport à l'autre de manière à exécuter l'action de coupe,
ledit dispositif de sécurité comprenant
- une unité de friction (3) située entre le moteur (2) et les lames (4), l'unité de friction comprenant une tige formant pivot central (7) supportée par le carter (1) de manière à pouvoir tourner,
- des moyens (15) pour transformer son mouvement de rotation en un déplacement en va-et-vient des lames (4),
- un pignon (13) engrenant avec un pignon (5) fixé rigidement à l'arbe (2) du moteur,
**caractérisé en ce que** ladite unité de friction (3) comporte des moyens d'isolation électrique aptes à isoler électriquement le moteur (2) par rapport aux lames (4),
**en ce que** lesdits moyens d'isolation électrique comprennent un couple d'anneaux (11, 12) formés d'une matière plastique et qui sont aptes à l'accouplement par friction dudit pignon (13) avec ladite tige formant pivot (7) par un couple d'anneaux métalliques (10, 14) qui sont disposés sur les surfaces planes opposées desdits anneaux (11, 12) de matière palstique pour engrener par frottement avec ces derniers,
lesdits anneaux (11, 12) de matière plastique étant serrés l'un contre l'autre et montés coaxialement sur ladite tige formant pivot (7) en étant disposés en vis-à-vis.

2. Dispositif selon la revendication 1, **caractérisé en ce que** lesdits anneaux (11, 12) comportent des parties saillantes (19) aptes à s'engager dans des renforcements respectifs (20) formés sur ledit pignon pour empêcher une rotation relative entre eux.

3. Dispositif selon la revendication 1 ou 2, **caractérisé par** des moyens (8) pour régler l'intensité de la force de frottement agissant entre lesdits anneaux métalliques (10, 14) et lesdits anneaux en matière plastique (11, 12).
